# FASCICULE DE BREVET EUROPEEN

(11) **EP 0 763 884 B1**
(45) Date de publication et mention de la délivrance du brevet: **21.04.1999**
(21) Numéro de dépôt: 96114542.2
(22) Date de dépôt: 11.09.1996
(51) Int. Cl.: H02P 8/34

(54) **Dispositif de commande d'un moteur pas à pas unipolaire permettant la détection du blocage du rotor**
Regelvorrichtung für einen unipolaren Schrittmotor zur Erkennung der Rotorblockierung
Unipolar motor control device for detection of rotor locking

(30) Priorité: 13.09.1995 FR 9510806; 13.09.1995 FR 9510807
(43) Date de publication de la demande: 19.03.1997
(73) Titulaire: VALEO ELECTRONIQUE, 94042 Creteil Cédex (FR)
(72) Inventeur: Huynh, Tan Duc, 77186 Noisiel (FR)
(74) Mandataire: Gamonal, Didier

(56) Documents cités:
- DE-A- 4 035 970
- FR-A- 2 648 289
- GB-A- 2 192 736

## Description

La présente invention concerne un dispositif de commande d'un moteur pas à pas unipolaire permettant la détection du blocage du rotor.

Elle trouve avantageusement application pour des moteurs pas à pas unipolaires utilisés pour la commande de mécanismes dans des véhicules automobiles, tels que des mécanismes de réglage de la position de volets utilisés dans des installations de chauffage/ventilation ou de climatisation.

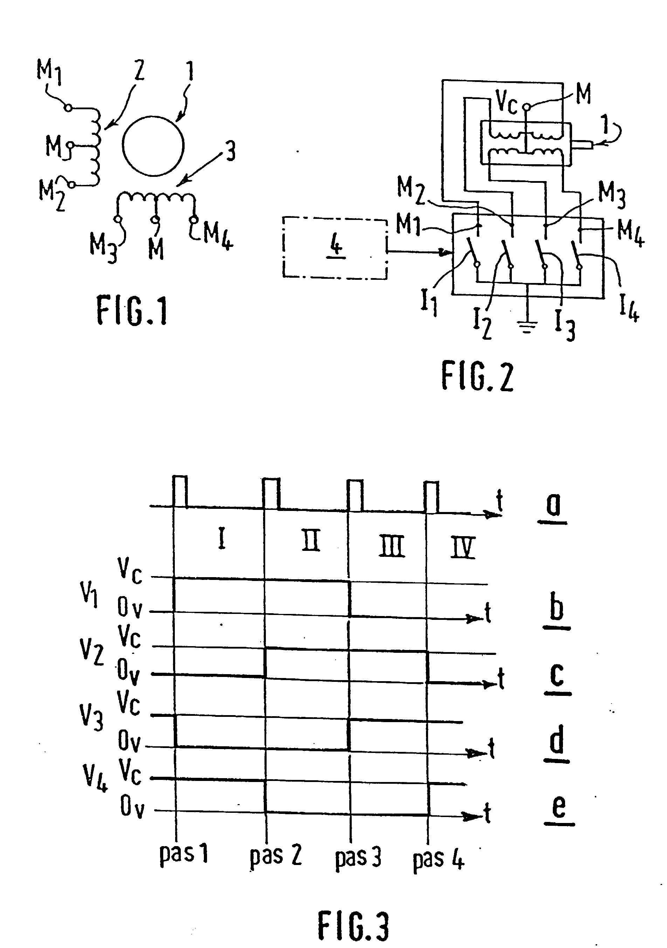

On a représenté schématiquement sur la figure 1 et sur la figure 2 un moteur pas à pas unipolaire à quatre phases, ainsi qu'un circuit pour la commande en tension de ce moteur. Ce moteur comporte un rotor 1 et deux bobines 2 et 3.

Le rotor 1 est constitué par un aimant cylindrique permanent présentant par exemple 24 pôles.

Les deux bobines 2 et 3 sont chacune alimentées en tension en un point milieu M relié à une source de tension continue Vc qui est par exemple la batterie du véhicule délivrant audit point milieu M une tension de +12 Volts.

Les extrémités desdites bobines, référencées par M1 et M2 pour la bobine 2 et par M3 et M4 pour la bobine 3, sont chacune reliées à la masse par un interrupteur, référencé respectivement de I1 à I4. Ces différents interrupteurs I1 à I4 sont commandés par une électronique de contrôle 4. Un cycle de commande approprié de ces interrupteurs I1 à I4 permet la rotation du moteur.

Par abus de langage, on parle des bobines MM1, MM2, MM3 et MM4 pour désigner les quatre demi-bobines qui correspondent aux quatre phases du stator d'un tel moteur pas à pas. Dans la suite, on utilisera indistinctement les termes bobines, demi-bobines, branches ou phases, pour désigner les enroulements inductifs constituant les différentes phases du stator.

Un moteur pas à pas est classiquement associé à un réducteur, pour former un motoréducteur pas à pas. Les moteurs pas à pas remplacent avantageusement le couple moteur à courant continu/détecteur de position, la position du rotor du moteur étant connue à tout instant sans nécessiter de capteur, par comptage/décomptage des pas effectués dans un sens de rotation ou dans l'autre. Ce comptage/décomptage permet bien sûr de connaître l'angle parcouru par le motoréducteur et donc la position du volet. Les motoréducteurs pas à pas permettent un positionnement très précis dudit volet.

Cependant, la commande du moteur pas à pas s'effectuant sans connaissance de la position effective du rotor, il n'est pas possible de détecter de façon directe le blocage de celui-ci. Un tel blocage a pour conséquence le fait que le nombre de pas effectués est différent du nombre de pas commandés.

Cette situation peut survenir lorsque le moteur pas à pas est soumis à un couple mécanique résistant important, par exemple lorsque le mouvement du volet qui est entraîné par le motoréducteur est ralenti voire stoppé par la présence d'un corps étranger dans le conduit d'air. Ceci occasionne une perte de synchronisme entre la commande du moteur et la position effective du volet.

Dans le document FR 2 648 289, il a été proposé de piloter un moteur pas à pas à l'aide d'un circuit de commande et d'un circuit de puissance tel qu'un hacheur de tension, dans lequel une mesure du courant circulant à travers les enroulements du moteur permet de réaliser une régulation pour la commande en courant du moteur. Dans ce document, il est observé qu'il se produit une modification qualitative et quantitative du courant de phase lorsque le rotor du moteur est bloqué. Cette variation du courant de phase est détectée par une variation de la tension entre deux lignes reliant le circuit de commande au circuit de puissance.

Cependant, un dispositif tel que celui divulgué dans le document de l'art antérieur précité n'est applicable qu'au cas d'un moteur pas à pas commandé en courant. De plus, il est nécessaire de filtrer la tension mesurée de manière à la débarrasser de la modulation produite par le hachage résultant de la commande en courant.

De plus, un tel dispositif ne permet pas de distinguer un blocage complet du rotor d'un simple freinage de celui-ci qui serait dû à l'application momentanée d'un couple résistant. Or, en général, seul un blocage complet du rotor occasionne une perte de synchronisme.

Par ailleurs, pour obtenir une information numérique exploitable par un organe de calcul, il est nécessaire de procéder à une conversion analogique/numérique du signal analogique mesuré, cet échantillonnage devant se faire à des instants bien précis par rapport aux impulsions de commande afin de détecter le phénomène. En pratique, ce contrôle rigoureux des instants d'échantillonnage est difficilement réalisable.

Dans le document DE-A 40 35 970, il est proposé un dipositif consistant à mesurer la tension aux bornes d*'*au moins deux phases du moteur commandé en tension, et à comparer leurs valeur à une valeur de seuil déterminée, un blocage du rotor étant détecté lorsque les valeurs mesurées sont inférieures à ladite valeur de seuil.

Le dispositif décrit dans ce document est cependant encore imparfait. En effet, il nécessite de porter chaque tension mesurée sur une entrée de conversion analogique/numérique d'un microcontrôleur pour que sa valeur soit numériquement comparée à la valeur de seuil, qui est elle même également portée sur une telle entrée. Il est donc nécessaire d'utiliser un microcontrôleur comprenant beaucoup d'entrées de conversion analogique/numérique, donc d'un coût relativement élevé. Les étapes de conversion analogique/numérique sont des étapes qui nécessitent un temps de traitement non négligeable. Le programme de pilotage du moteur pas à pas doit de plus comporter une routine particulière pour traiter l'ensemble des données ainsi acquises, ce qui en ralentit l'éxécution par le microcontrôleur.

L'objet de la présente invention est de pallier ces inconvénients de l'état de la technique, notamment en supprimant les étapes de conversion analogique/numérique de la tension aux bornes des phases du stator.

En effet, l'un des buts de l'invention est de proposer un dispositif de commande en tension d'un moteur pas à pas comprenant des moyens externes au microcontrôleur pour détecter rapidement le blocage complet du rotor, afin qu'il en soit tenu compte pour commander le moteur de manière à éviter toute perte de synchronisme.

Un autre but est de l'invention est de proposer une structure pour ces moyens qui soit simple et fiable, produisant un signal logique tel qu'une tension pouvant prendre deux état différents et qui soit directement représentative du blocage du rotor.

A cet effet, la présente invention concerne un dispositif pour la commande d'un moteur pas à pas unipolaire comportant un rotor magnétique et un stator qui présente une pluralité de bobines destinées à entraîner ledit rotor, et comprenant une source de tension continue à laquelle sont reliées une première borne desdites bobines ainsi qu'une unité de contrôle reliée aux secondes bornes desdites bobines pour commander la tension aux bornes des bobines selon une séquence répétitive qui correspond à plusieurs phases de commande successives, ledit dispositif se caractérisant en ce qu'il comporte de plus au moins une unité de détection du blocage du rotor dont une entrée est reliée à la seconde borne d'une bobine à surveiller du stator, et dont la sortie est connectée à une entrée de ladite unité de contrôle pour transmettre un signal directement représentatif du blocage du rotor.

Par l'expression « directement représentatif du blocage du moteur », il faut comprendre, d'une part, que le signal délivré par l'unité de détection du blocage du rotor est généré sans qu'il soit besoin d'opérer une démodulation ou des mesures de tensions à des instants précis d'échantillonnage, et, d'autre part, qu'il porte en lui l'information relative au blocage du rotor, sans qu'il soit besoin de le convertir en un signal numérique exploitable par le microncontrôleur.

Selon un mode particulier de réalisation de l'invention l'unité de détection du blocage du rotor comprend un comparateur dont une première entrée est connectée à l'entrée de l'unité de détection du blocage du rotor, dont une seconde entrée est connectée à la borne positive de la source d'alimentation continue, et dont la sortie est connectée à la sortie de l'unité de détection du blocage du rotor.

Dans un mode de réalisation particulier de l'invention, l'unité de détection du blocage du rotor comprend au moins une deuxième entrée reliée à la seconde borne d'une seconde bobine du stator dont la tension de commande est complémentaire de la tension de commande de la première bobine portée sur la première entrée seconde bobine du stator dont la tension de commande est complémentaire de la tension de commande de la première bobine portée sur la première entrée.

Dans ce cas, l'unité de détection du blocage du rotor comprend :
- au moins un opérateur logique « OU » dont les entrées sont connectées aux entrées de l'unité de détection du blocage du rotor ;
- au moins un comparateur dont une première entrée est connectée à la sortie dudit opérateur logique « OU », dont la seconde entrée est connectée à la borne positive de la source d'alimentation continue, et dont la sortie est connectée à la sortie de l'unité de détection du blocage du rotor.

Préférentiellement, l'opérateur logique « OU » est un opérateur dit « en logique câblée », et comprend au moins deux diodes dont les anodes sont connectées respectivement aux deux entrées de l'opérateur et dont les cathodes sont reliées ensemble et connectées à la sortie de l'opérateur, ainsi qu'une résistance connectée entre les cathodes desdites diodes et la masse.

Selon un autre mode de réalisation particulier de l'invention, le comparateur comprend un transistor PNP monté en comparateur inverseur, dont la base est connectée à l'entrée dudit comparateur à travers une première résistance, dont l'émetteur est connecté à la borne positive de la source d'alimentation continue, et dont le collecteur est relié à la masse à travers une seconde résistance et une troisième résistance montées en pont diviseur, la sortie de ce pont diviseur étant connectée à la sortie du comparateur.

Selon une autre caractéristique de l'invention, l'émetteur du transistor PNP est relié à la borne positive de la source d'alimentation continue à travers au moins une diode, dont l'anode est connectée à ladite borne positive de la source d'alimentation continue et dont la cathode est connectée audit émetteur.

Selon un autre mode particulier de l'invention, l'unité de contrôle comprend un microcontrôleur qui contient dans une première zone de mémoire un programme pour la mise en oeuvre de la séquence de commande de la tension aux bornes des bobines du stator ; qui contient dans une seconde zone de mémoire la valeur d'un compteur/décompteur du nombre de pas commandés dans un sens de rotation ou dans l'autre ; qui comporte une horloge interne pour générer un signal d'horloge ; qui comporte des sorties qui sont reliées à la seconde borne des bobines du stator et qui sont alternativement portées à la tension d'alimentation ou à la masse selon la séquence de commande du moteur ; qui comporte au moins un port numérique d'entrée, constituant ladite entrée de l'unité de contrôle, qui est connecté à la sortie de l'unité de détection du blocage du rotor pour recevoir le signal de détection du blocage du rotor.

Selon un autre mode de réalisation particulier de l'invention, ledit port d'entrée est une entrée d'interruption, une interruption du programme pour la mise en oeuvre de la séquence de commande de la tension aux bornes des bobines du stator étant générée en cas de réception d'un front du signal de détection du blocage du rotor pendant les phases de commande où le courant dans la bobine à surveiller du stator est nul.

Dans le second mode de réalisation, ledit port numérique d'entrée est une entrée d'interruption du microcontrôleur, et une interruption du programme pour la mise en oeuvre de la séquence de commande de la tension aux bornes des bobines du stator est générée en cas de réception d'un front du signal de détection du blocage du rotor.

L'invention concerne aussi une installation de chauffage ventilation et/ou climatisation qui comporte au moins un volet de réglage de la quantité ou de la qualité (chaud/froid) de l'air qui est entraîné par un motoréducteur pas à pas mettant en oeuvre le dispositif de commande défini ci-dessus.

C'est un avantage de l'invention que de ne détecter qu'un blocage complet du rotor, et de ne pas réagir à un simple freinage du rotor dû à l'apparition momentanée d'un couple résistant. Ceci permet en effet de ne générer un signal de détection du blocage du moteur qu'en cas de réelle perte de synchronisme entre le nombre de pas commandés et le nombre de pas réellement effectués.

C'est un autre avantage de l'invention que de permettre le détection du blocage du rotor du moteur sans aucun traitement du signal mesuré, notamment sans réaliser d'échantillonnage de ce signal analogique, à des instants précis, ni de conversion analogique/numérique pour le traiter numériquement. Ceci procure en effet une bonne fiabilité de détection.

D'autres caractéristiques et avantages de l'invention seront mieux compris à la lecture de la description qui va suivre en référence aux dessins annexés qui sont :
- à la figure 1 et à la figure 2 déjà analysées, des représentations schématiques d'un moteur pas à pas ;
- à la figure 3, des diagrammes temporels illustrant une séquence répétitive de la commande en tension des phases du moteur ;
- à la figure 4, des digrammes temporels montrant la forme de la tension effective aux bornes d'une phase lorsqu'elle est alimentée en l'état normal du rotor ;
- à la figure 5 une représentation de la forme de la tension effective aux bornes d'une bobine alimentée en l*'*état normal, partiellement bloqué ou complètement bloqué du rotor ;
- à la figure 6, un schéma d'un premier mode de réalisation du dispositif pour la commande d'un moteur pas à pas selon l'invention ;
- à la figure 7, des diagrammes temporels de signaux produits par le dispositif de commande de la figure 6, notamment le signal de détection du blocage du rotor ;
- à la figure 8, un schéma d'un deuxième mode de réalisation du dispositif selon l'invention ;
- à la figure 9, des diagrammes temporels de signaux produits par le dispositif de commande de la figure 8.

A la figure 3 on a représenté un cycle de commande des interrupteurs I1 à I4 de la figure 2, pour la commande du moteur pas à pas représenté schématiquement à la figure 1. Sur la figure 3a, on a représenté en fonction du temps, une séquence d'impulsions de l'horloge de l'électronique de contrôle 4. La durée de la période T entre deux impulsions successives est de 10 millisecondes. Sur les figures 3b à 3e, on a représenté en fonction du temps les tensions V1 à V4 imposées aux points M1 à M4 par la séquence d'ouverture ou de fermeture des interrupteurs I1 à I4. Les séquences de tension représentées sur ces figures 3b à 3e sont synchronisées sur la séquence d'impulsions représentée sur la figure 3a.

Les tensions V1 à V4 imposées aux points M1 à M4 sont représentées aux figures 3b à 3e dans leur forme idéale, c'est à dire sous forme de créneaux de tension.

Comme on peut le voir sur ces figures la tension V3 est le complément de la tension V1, la tension V4 étant le complément de la tension V2. Dit autrement, les tensions de commande des bobines M1 et M3 sont en opposition de phase (décalées de 180°), et les tensions de commandes des bobines M2 et M4 sont également en opposition de phase.

La tension V2 est en retard de 90° par rapport à la tension V1. De même la tension V4 est en retard de 90° par rapport à la tension V3. Ainsi chaque interrupteur I1 à I4 est fermé pendant deux phases successives, la branche MM1 à MM4 correspondante étant alors traversée par un courant qui engendre un flux magnétique, et la tension aux bornes de ladite branche étant idéalement égale à la tension d*'*alimentation positive Vc. Il est ensuite ouvert pendant les deux phases suivantes, la branche MM1 à MM4 n'étant alors traversée par aucun courant, et la tension aux bornes de ladite branche étant alors nulle.

La séquence de commande illustrée sur les figures 3a à 3e est la suivante :
- pendant la phase I (pas 1 à pas 2), ce sont les branches MM2 et MM3 qui sont parcourues par un courant et qui engendrent des flux magnétiques, les tensions aux bornes des branches MM1 et MM4 étant nulles ;
- pendant la phase II (pas 2 à pas 3), ce sont les branches MM3 et MM4 de la bobine 3 qui sont parcourues par un courant et qui engendrent des flux magnétiques, les tensions aux bornes des branches MM1 et MM2 de la bobine 1 étant nulles ;
- pendant la phase III (pas 3 à pas 4), ce sont les branches MM1 et MM4 qui sont parcourues par un courant et qui engendrent des flux magnétiques, les tensions aux bornes des branches MM2 et MM3 de la bobine 1 étant nulles ;
- pendant la dernière phase IV (pas 4 vers nouvelle séquence), les branches MM1 et MM2 de la bobine sont toutes deux parcourues par un courant et engendrent des flux magnétiques, les tensions aux bornes des branches MM3 et MM4 de la bobine 2 étant nulles.

Ainsi qu'on l'aura compris le circuit de contrôle 4 ainsi que les interrupteurs I1 à I4, sont compris dans un microcontrôleur dédié se présentant sous la forme d'un circuit intégré.

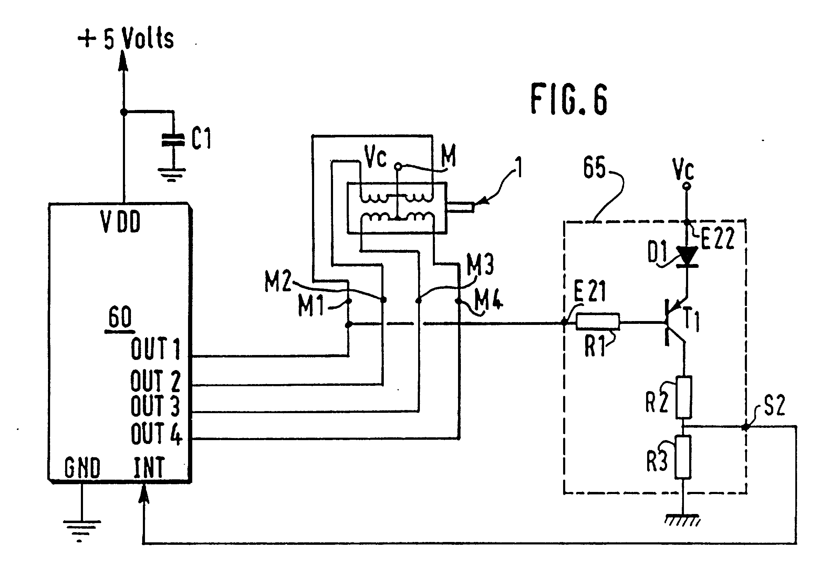

A la figure 6 on a représenté un tel microcontrôleur dont des sorties OUT1 à OUT4 sont directement reliées aux extrémités des bobines M1 à M4. L'état haut ou bas desdites sorties du circuit intégré, correspond à l'état ouvert ou fermé des interrupteurs I1 à I4 de la figure 2, ou vice versa.

Ce microcontrôleur dédié est par exemple un circuit intégré capable de fournir sur ses sorties le courant nécessaire à l'alimentation des phases du stator.

Le microcontrôleur 60 comporte une horloge interne délivrant un signal d'horloge de période. Il comporte aussi une entrée VDD pour recevoir une tension d'alimentation par exemple 5 Volts, l'entrée VDD étant par ailleurs reliée à la masse à travers un condensateur de découplage C1.

Le microcontrôleur 60 comporte de plus une première zone (registre) de mémoire non volatile dans laquelle est sauvegardé un programme pour la mise en oeuvre de la séquence de commande de la tension aux bornes des bobines du stator.

Le microcontrôleur 60 comporte en outre une entrée d*'*interruption INT sur laquelle, sous certaines conditions logicielles, l'arrivée d'un front montant (ou selon le cas, d'un front descendant), peut générer une interruption du programme en cours d'exécution.

Le microcontrôleur 60 comporte enfin un compteur/décompteur dont la valeur est sauvegardée dans une seconde zone (registre) de mémoire, qui fournit une information sur la position instantanée du servomoteur et donc du volet de ventilation ou de climatisation entraîné par le servomoteur.

Une opération de calage du moteur consiste à commander le moteur pour qu'il atteigne une position de butée mécanique, cette butée s'exprimant comme la valeur 0% ou 100% de la position angulaire du volet exprimée en pourcentage d'un angle de rotation correspondant à la course totale du volet. La valeur du compteur/décompteur du nombre de pas commandés est alors initialisée à zéro.

Le moteur peut ensuite être commandé pour atteindre une position angulaire de consigne qui est exprimée en pourcentage. La valeur du compteur de pas commandés est incrémentée d'une unité lorsque le moteur est commandé pour effectuer un pas dans un premier sens de rotation, et est décrémentée d'une unité lorsque le moteur est commandé pour effectuer un pas dans l'autre sens.

Ainsi qu'il a été rappelé en préambule de la présente demande, il est nécessaire de détecter tout blocage éventuel du rotor du moteur, pouvant entraîner une perte de synchronisme entre le nombre de pas commandés par le microcontrôleur 60 et le nombre de pas effectivement réalisés par le moteur. C'est cette détection du blocage du rotor qui est permise par le dispositif selon l'invention.

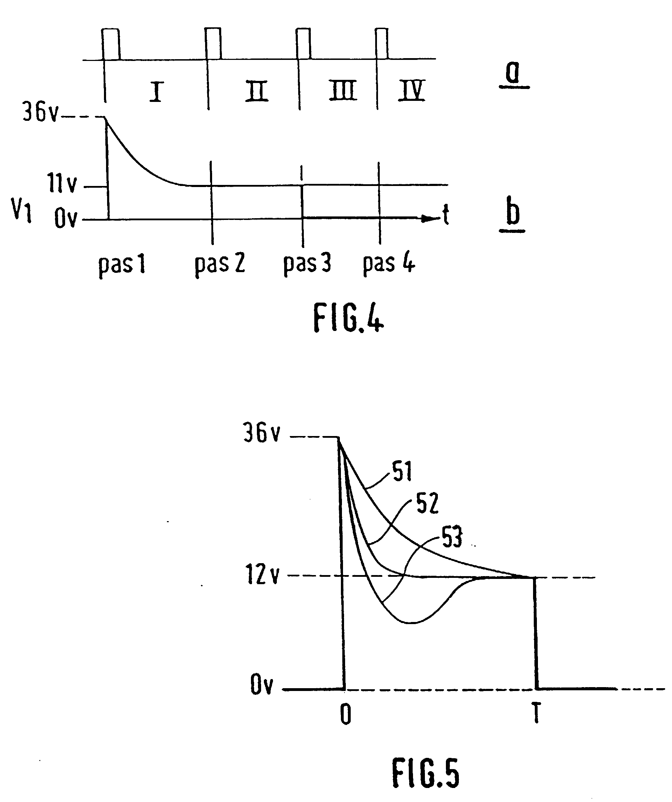

A la figure 4a, on a représenté en fonction du temps, une séquence d'impulsion de l'horloge interne pilotant le microcontrôleur 60. Ces impulsions sont périodiques de période T, la période T correspondant à la durée d'un pas du moteur.

A la figure 4b on a représenté la forme de la tension effective présente aux bornes de la branche de bobine MM1 lorsqu'elle est alimentée.

Du fait du caractère essentiellement inductif des bobines M1 à M4, la tension effective à leurs bornes lorsque la phase correspondante est alimentée ne présente pas la forme d'un créneau parfait tel que représenté à la figure 3a mais présente la forme du signal représenté à la figure 4b. Ainsi qu'on peut le voir sur cette figure, correspondant à une tension d'alimentation Vc de valeur égale à 12 Volts, le niveau de la tension effective aux bornes d'une bobine présente un pic pouvant atteindre une valeur de 36 Volts. Ce pic correspond à une surtension aux bornes de la charge inductive constituée par ladite bobine. La tension effective aux bornes de la bobine décroît ensuite selon une courbe sensiblement hyperbolique jusqu'à atteindre une valeur approximativement égale à Vc.

Selon une observation importante, à la base du principe de l'invention, la forme de la tension aux bornes d'une bobine dépend du couple résistant qui est appliqué au rotor du moteur par le mécanisme entraîné.

En effet il a été constaté que la décroissance de cette tension succédant au pic de surtension 40 est d'autant plus rapide que le rotor du moteur est soumis à un couple résistant important (on parle alors de blocage partiel du rotor).

Par ailleurs, lorsque le rotor est complètement bloqué, c'est à dire lorsqu'il est immobilisé, la tension aux bornes de la bobine qui est alimentée décroît nettement en dessous de la valeur de la tension d'alimentation Vc avant de remonter et de se stabiliser autour de cette valeur.

Ce phénomène semble provenir de ce que, lorsque le volet est complètement immobilisé par un obstacle, le rotor se met à vibrer à la fréquence de commande des phases du stator, du fait qu'il se décroche puis s'accroche de nouveau au champ tournant du stator.

Ce mouvement oscillatoire du rotor engendre une tension de type sinusoïdale dans les bobines non alimentées du stator qui se comportent alors en capteur de déplacement du rotor.

Cette tension aux bornes des bobines non alimentée génère, par couplage magnétique, une modification de la forme de la tension aux bornes des autres bobines, y compris celles qui sont alimentées.

Sur la figure 5, on a représenté une première courbe 51 correspondant à l'évolution de la tension aux bornes d'une branche de bobine en fonction du temps dans le cas d'un fonctionnement normal, ainsi qu'une seconde courbe 52 correspondant à l'évolution de la tension dans le temps aux bornes de la même branche de bobine en cas de blocage partiel du rotor du moteur.

En comparant les courbes 51 et 52, on voit que la tension aux bornes de la branche de bobine décroît beaucoup plus rapidement lorsque le rotor est partiellement bloqué que dans le cas d'un fonctionnement normal.

Par ailleurs, on a aussi représenté une troisième courbe 53 correspondant à un blocage complet du rotor du moteur. On voit que la courbe 53 passe en dessous du niveau de la tension Vc. La différence entre la tension d'alimentation Vc et le niveau minimum atteint par la tension aux bornes d'une bobine alimentée en cas de blocage complet du rotor peut atteindre plusieurs volts.

L'invention a pour but d'exploiter ce phénomène en comparant de façon permanente la tension aux bornes d'au moins une bobine du stator et la tension d'alimentation Vc.

A la figure 6, partiellement décrite ci-dessus, on a aussi représenté une unité 65 de détection du blocage du rotor 1 du moteur conformément à l'invention. Cette unité 65 de détection comporte une entrée E21 qui est reliée à l'extrémité M1 d'une bobine MM1 du stator du moteur.

L'unité 65 de détection du blocage du rotor 1 du moteur comporte de plus une sortie S2 qui est connectée à une entrée numérique INT du microcontrôleur. Préférentiellement, ainsi qu'il sera précisé plus loin, cette entrée numérique INT est une entrée d'interruption du microcontrôleur 60.

L'unité 65 de détection du blocage du rotor comprend au moins un comparateur dont une première entrée est reliée à l'entrée E21 de ladite unité 65 de détection, dont une seconde entrée E22 est connectée à la borne positive de la source d'alimentation, et dont la sortie est connectée à la sortie S2 de l'unité 65 de détection du blocage du rotor.

Selon un mode de réalisation préféré de l'invention, le comparateur comprend un transistor T1 tel qu'un transistor PNP, monté en comparateur inverseur, dont la base est reliée à l'entrée E21 dudit comparateur à travers une résistance R1, dont l'émetteur est connecté à la seconde entrée E22 du comparateur, et dont le collecteur est relié à la masse à travers une résistance R2 et une résistance R3 montées en pont diviseur. La sortie de ce pont diviseur, c'est à dire le point commun aux résistances R2 et R3, est connecté à la sortie S2 du comparateur.

Préférentiellement, l'émetteur du transistor T1 est relié à la seconde entrée E22 du comparateur à travers au moins une diode D1, dont l'anode est reliée à ladite seconde entrée E22 et dont la cathode est reliée audit émetteur.

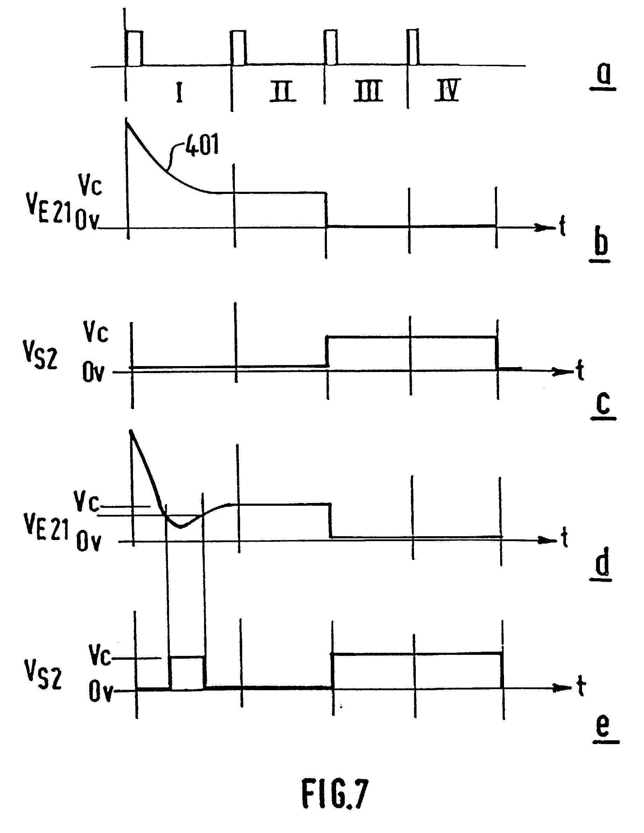

Le fonctionnement du dispositif de l'invention va maintenant être décrit en détails, en regard de la figure 7.

A la figure 7a, on a représenté en fonction du temps, une séquence d'impulsion de l'horloge interne pilotant le microcontrôleur 60. Ces impulsions sont périodiques de période T, la période T correspondant à la durée d'un pas du moteur.

A la figure 7b, on a représenté le signal V_{E21} en entrée de l'unité 65 de détection du blocage du rotor, c'est à dire la tension effective aux bornes de la bobine MM1, dans le cas d'un fonctionnement normal. La forme de la tension effective aux bornes d'une bobine en cas de fonctionnement normal a déjà été décrite en regard de la figure 4. Ainsi, sans autres explications, on comprend que le signal V_{E21} présente un pic de surtensions 401 au moment du déclenchement du pas 1. Par ailleurs, on comprend qu'en cas de fonctionnement normal, le signal V_{E21} n'est jamais en dessous de la valeur Vc de la tension positive d'alimentation pendant les phases de commande I et II.

A la figure 7c, on a représenté le signal V_{S2} en sortie S2 de l'unité 65 de détection du blocage du rotor du moteur, en cas de fonctionnement normal. Ce signal est donc produit par l'unité 65 de détection du blocage du rotor lorsque le signal V_{E21} représenté à la figure 7b est présent sur sa première entrée E21.

L'émetteur du transistor T1 étant porté à la valeur Vc de la tension d'alimentation positive, déduite d'une valeur égale à la chute de tension aux bornes de la diode D1 qui est de l'ordre de 0,7 volt lorsque cette diode est conductrice, et, ainsi qu'il a été dit ci-dessus, le signal V_{E21} porté sur la base du transistor T1 à travers la résistance R1 n'étant jamais en dessous de cette valeur Vc pendant les phases I et II en cas de fonctionnement normal, le transistor T1 est bloqué pendant ces phases et aucun courant ne circule côté collecteur. C'est pourquoi la tension en sortie S2 du comparateur 66 est nulle pendant les phases I et.

A l'inverse, pendant les phases III et IV, le signal V_{E21} porté sur la base du transistor T1 à travers la résistance R1 est quasiment nul. Un courant résiduel d'induit circulant en réalité dans la bobine MM1, ce signal n'est pas parfaitement nul et un courant de base peut être fourni au transistor T1. En effet, la tension de base du transistor T1 étant largement inférieure à la tension Vc, la jonction de la diode D1 et la jonction émetteur-base du transistor T1 sont passantes, de sorte que le transistor T1 conduit et est saturé. Un courant de collecteur Ic égal au courant de saturation du transistor T1 circule alors à travers les résistances de collecteur R2 et R3. Le signal V_{S2} en sortie S2 du comparateur 66 n'est alors plus nul mais de valeur égale au produit de R3 par Ic ( V_{S2} = R3 x Ic).

Ainsi qu'il ressort des explications ci-dessus, et ainsi qu'il a déjà été dit, le transistor T1 fonctionne en comparateur inverseur.

A la figure 7d on a représenté le signal V_{E21} présent en entrée de l'unité 65 de détection du blocage du moteur, cette fois en cas de blocage complet de rotor du moteur.

Ainsi qu'il a été décrit en détails en regard de la figure 5, le pic de surtension 401 est suivi d'un passage en dessous du niveau de la tension Vc d'alimentation positive. En pratique, le signal V_{E21} peut atteindre un niveau inférieur au moins de 2 volts à la tension Vc.

A la figure 7e, on a représenté le signal V_{S2} en sortie S2 de l'unité 65 de détection du blocage du rotor du moteur, en cas de blocage complet du rotor. Ce signal est donc produit par ladite unité 65 de détection lorsque le signal V_{E21} représenté à la figure 7d est présent sur son entrée E21.

Pendant les phases de commande III et VI, ainsi que pendant les phases de commande I et II lorsque le signal V_{E21} porté sur la base du transistor T1 à travers la résistance R1 est suffisamment inférieur à la tension Vc pour que la jonction de la diode D1 et la jonction émetteur-base du transistor T1 soient passantes, le transistor T1 conduit et est saturé. Un courant de collecteur Ic égal au courant de saturation du transistor T1 circule alors à travers les résistances de collecteur R2 et R3, et la valeur du signal V_{S2} en sortie S2 de l'unité de détection est égale au produit de R3 par Ic ( V_{S2} = R3 x Ic).

Dans les autres moments, le transistor T1 est bloqué et le signal V_{S2} en sortie S2 de l'unité 65 de détection est nul

Ainsi qu'un l'aura compris, le choix de la valeur des résistances R2 et R3 du pont diviseur est effectué de manière à obtenir un signal V_{S2} d'amplitude admissible en entrée du microcontrôleur 60, c'est à dire 5 volts

En cas de blocage complet du rotor, le signal V_{S2} comporte donc un créneau d'amplitude 5 volts pendant les phases de commande I et II, alors qu'il est nul pendant ces phases en cas de fonctionnement normal.

Ce signal se présente bien comme un signal numérique représentatif du blocage du rotor, et constitue donc le signal de détection du blocage du rotor selon l'invention. Il est directement exploitable en entrée du microcontrôleur 60, par exemple en le portant sur une entrée d'interruption INT dudit microcontrôleur.

En effet, par conception, le microcontrôleur peut, à la réception sur une telle entrée d'interruption d'un front montant (ou d'un front descendant selon la nature logique de cette entrée), générer une interruption dans le déroulement du programme en cours d'exécution et, par exemple, enchaîner sur l'exécution d'une sous-routine particulière. A réception d'une telle interruption, le programme pilotant le microcontrôleur peut ainsi effectuer un traitement déterminé en fonction de la valeur de certaines variables du programme.

Selon le présent mode de réalisation de l'invention, une interruption générée sur l'entrée INT du microcontrôleur 60 n'est considérée comme résultant du blocage du rotor du moteur, et par conséquent n'est prise en compte par le programme de commande, que si elle est reçue au cours d'une phase de commande au cours de laquelle la bobine surveillée est non alimentée, c'est à dire lorsque le courant dans cette bobine est nul. Pour la bobine MM1, il s'agit des phases I et II, selon l'exemple de réalisation envisagé dans la présente demande.

Selon le mode de réalisation de l'invention envisagé dans la présente demande, l'interruption est générée aux conditions ci-dessus, à réception d'un front montant du signal de détection V_{S2}.

Le signal de détection du blocage du rotor généré en sortie S2 de l'unité de détection 65 peut aussi être porté sur une entrée numérique classique du microcontrôleur.

Dans tous les cas, le programme de commande du moteur pas à pas est conçu pour inhiber le compteur/décompteur du nombre de pas commandés par le microcontrôleur. La valeur de ce compteur étant utilisée pour mémoriser la position instantanée du rotor du moteur, on évite ainsi la perte de synchronisme entre le nombre de pas commandés et le nombre de pas réellement effectués par le servomoteur pas à pas.

Par ailleurs, le microcontrôleur peut déclencher l'exécution d'une sous-routine particulière destinée à assurer un traitement adapté à la situation de blocage du rotor, par exemple l'affichage d'une information visuelle sur le tableau de bord ou la transmission d'une information correspondante à un ordinateur de bord.

Ainsi qu'on aura pu s'en rendre compte, le signal de détection du blocage du rotor est généré par le dispositif de commande du moteur avec des moyens relativement simples. Par ailleurs, le blocage du rotor est détecté de façon relativement fiable dans la mesure où le seuil de détection du comparateur 66 est de l'ordre de 1,4 volts lorsqu'une diode D1 est montée en série avec la jonction émetteur-base du transistor T1.

Il est bien évident que ce seuil de détection peut être augmenté en ajoutant d'autres diodes en série avec la diode D1. La diode D1 a en effet pour fonction d'augmenter le seuil de détection. Par ailleurs, selon un avantage des moyens de l'invention, la diode D1 permet également de protéger le transistor T1 en cas d'inversion de la polarité de l'alimentation.

La présente invention a été décrite dans le cadre d'un moteur pas à pas unipolaire comportant quatre phases, mais il est bien évident qu'elle peut aussi s'appliquer au cas d'un moteur comportant un nombre n quelconque de phases.

L'invention a été décrite ci-dessus selon un premier mode de réalisation possible qui n'est pas limitatif.

En particulier, il est bien évident qu'il est possible de surveiller n'importe quelle bobine du stator, une interruption n'étant générée que pendant les phases de commande ou cette bobine est non alimentée c'est à dire lorsque le courant à travers cette bobine est nul. De plus, la détection du blocage du rotor peut être effectuée de façon plus précise encore, en utilisant n unités de détection du blocage du rotor dont les entrées reçoivent la tension aux bornes de n bobines du stator. Les signaux de détection du blocage du rotor générés en sortie de ces n unités de détection du blocage du rotor peuvent être portés sur n entrées d'interruption différentes ou être combinés dans une opération logique « OU » à n opérandes pour générer un unique signal qui serait porté sur une unique entrée d'interruption du microcontrôleur.

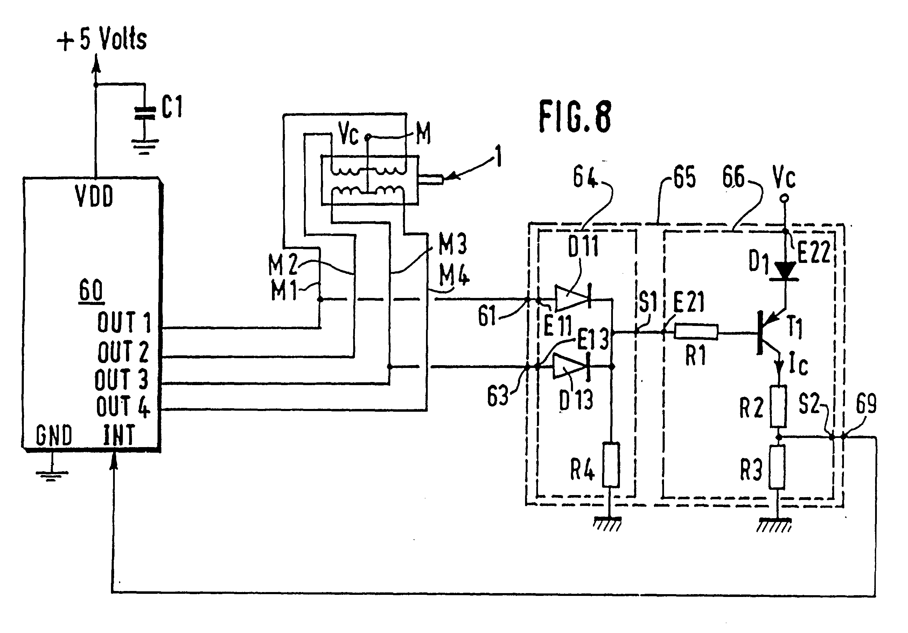

De plus, un deuxième mode de réalisation possible, représenté à la figure 8 sur laquelle les mêmes éléments qu'à la figure 6 portent les meêm références, permet d'alléger encore le traitement logique du signal de détection du blocage du rotor par le microcontrôleur, sans augmenter de façon trop considérable le schéma du circuit de détection.

A la figure 8, l'unité 65 de détection du blocage du rotor 1 du moteur comporte une première entrée 61 qui est reliée à l'extrémité M1 d'une bobine MM1 du stator du moteur, et une seconde entrée 63 qui est reliée à l'extrémité M3 d'une autre bobine MM3 dudit stator.

Il est important, selon de deuxième mode de réalisation de l'invention, que les deux bobines MM1 et MM3 ainsi choisies soient deux bobines dont les tensions de commandes sont en opposition de phase c'est à dire décalées de 180° (dans le cas d'un moteur à quatre phases). Plus généralement, il faut que ces tensions, qui ne peuvent prendre que deux valeurs qui sont la tension d'alimentation positive Vc ou la valeur nulle, soient complémentaires l'une de l'autre, c'est à dire que leur combinaison dans une opération de type « OU » produise un signal de valeur constante. Ainsi, selon le nombre de phase du stator, il peut être nécessaire de combiner plusieurs (plus de deux) signaux de commandes dans une opération de « OU » logique à plusieurs (plus de deux) opérandes, à l'aide d'un opérateur à plusieurs (plus de deux) entrées.

L'unité 65 de détection du blocage du rotor 1 du moteur comporte de plus une sortie 69 qui est connectée à une entrée numérique INT du microcontrôleur. Préférentiellement, cette entrée numérique INT est une entrée d'interruption du microcontrôleur 60.

L'unité 65 de détection du blocage du rotor comprend au moins un opérateur logique « OU » 64 dont les entrées E11 et E13 sont connectées respectivement aux entrées 61 et 63 de l'unité 65 de détection du blocage du rotor, ainsi qu'au moins un comparateur 66 dont une première entrée E21 (figure 8) est connectée à la sortie S1 dudit opérateur logique « OU » 64, dont la seconde entrée E22 est connectée à la borne positive de la source d'alimentation positive, et dont la sortie S2 est connectée à la sortie 69 de l'unité 65 de détection du blocage du rotor.

L'opérateur logique « OU » 64 est préférentiellement un opérateur dit « en logique câblée », et comprend deux diodes D11 et D13 dont les anodes sont connectées respectivement aux deux entrées E11 et E13 de l'opérateur et dont les cathodes sont reliées ensemble et connectées à la sortie S1 de l'opérateur, ainsi qu'une résistance R4 connectée entre les cathodes des diodes D11 et D13 et la masse.

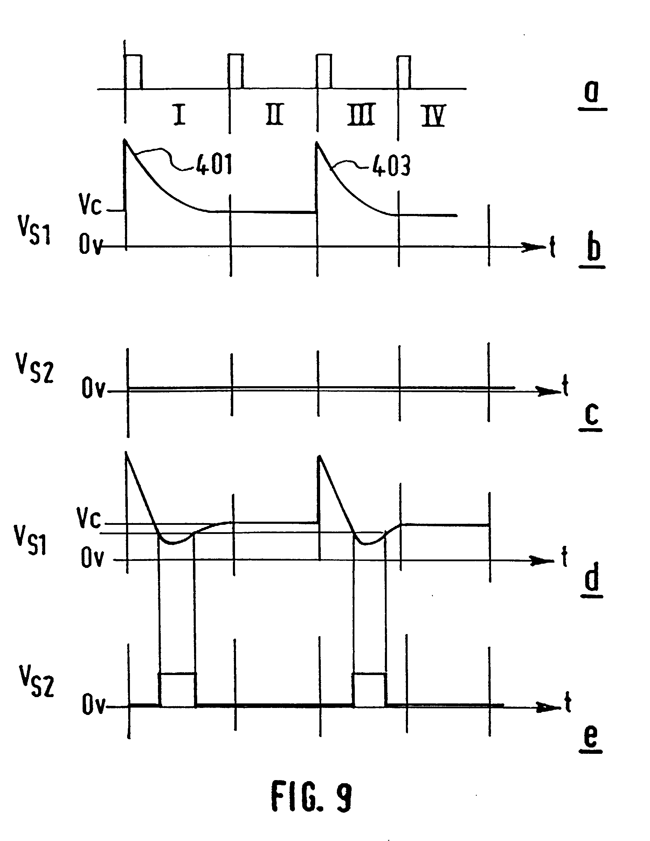

Le fonctionnement du dispositif de l'invention selon ce deuxième mode de réalisation va maintenant être décrit en détails, en regard de la figure 9.

A la figure 9a, on a représenté en fonction du temps, une séquence d'impulsion de l'horloge pilotant le microcontrôleur 60. Ces impulsions sont périodiques de période T, la période T correspondant à la durée d'un pas du moteur.

A la figure 9b, on a représenté le signal V_{S1} en sortie S1 de l'opérateur logique « OU » 64, dans le cas d'un fonctionnement normal. De par la structure même de l'opérateur logique « OU », et du fait que ses deux entrées reçoivent respectivement les tensions aux bornes des bobines MM1 et MM3 qui sont complémentaires l'une de l'autre, le signal V_{S1} se présente comme la superposition des tensions aux bornes des bobines MM1 et MM3. La forme de la tension effective aux bornes d'une bobine en cas de fonctionnement normal a déjà été décrite en regard de la figure 4. Ainsi, sans autres explications, on comprend que le signal V_{S1} présente des pics de surtensions 401 et 403 au moment du déclenchement des pas 1 et 3 respectivement. Par ailleurs, on comprend qu'en cas de fonctionnement normal, le signal V_{S1} n'est jamais en dessous de la valeur Vc de la tension positive d*'*alimentation.

A la figure 9c, on a représenté le signal V_{S2} en sortie S2 du comparateur 66 de l'unité 65 de détection du blocage du rotor du moteur, en cas de fonctionnement normal. Ce signal est donc produit par le comparateur 66 lorsque le signal V_{S1} représenté à la figure 9b est présent sur sa première entrée E21.

L'émetteur du transistor T1 étant porté à la valeur Vc de la tension d'alimentation positive, déduite d'une valeur égale à la chute de tension aux bornes de la diode D1 qui est de l'ordre de 0,7 volt lorsque cette diode est conductrice, et, ainsi qu'il a été dit ci-dessus, le signal V_{S1} porté sur la base du transistor T1 à travers la résistance R1 n'étant jamais en dessous de cette valeur Vc en cas de fonctionnement normal, le transistor T1 est bloqué et aucun courant ne circule côté collecteur. C'est pourquoi la tension en sortie S2 du comparateur 66 est nulle à tout instant, et le signal V_{S2} est plat, égal à la valeur nulle.

A la figure 9d on a représenté le signal V_{S1} présent en sortie S1 de l'opérateur logique « OU » 64, cette fois en cas de blocage complet de rotor du moteur.

A la figure 7e, on a représenté le signal V_{S2} en sortie S2 du comparateur 66 de l'unité 65 de détection du blocage du rotor du moteur, en cas de blocage complet du rotor. Ce signal est donc produit par le comparateur 66 lorsque le signal V_{S1} représenté à la figure 9d est présent sur sa première entrée E21 (figure 8).

Lorsque le signal V_{S1} porté sur la base du transistor T1 à travers la résistance R1 est suffisamment inférieur à la tension Vc pour que la jonction de la diode D1 et la jonction émetteur-base du transistor T1 deviennent passantes, le transistor T1 conduit et un courant de collecteur Ic circule à travers les résistances de collecteur R2 et R3. Le signal V_{S2} en sortie S2 du comparateur 66 n'est alors plus nul mais de valeur égale au produit de R3 par Ic ( V_{S2} = R3 x Ic).

En cas de blocage complet du rotor, le signal V_{S2} se présente donc comme une série d'impulsions d'amplitude R3 x Ic, se répétant à la période 2T.

Ce signal se présente bien comme un signal numérique représentatif du blocage du rotor, et constitue donc le signal de détection du blocage du rotor selon l'invention. Il directement exploitable en entrée du microcontrôleur 60, par exemple en le portant sur une entrée d'interruption INT dudit microcontrôleur.

Avantageusement, ainsi quon l'aura compris, ce signal n'est non nul qu'en cas de blocage du rotor, ce qui simplifie son traitement par le microcontrôleur 60.

L'invention concerne aussi une installation de chauffage ventilation et/ou climatisation, notamment pour véhicule automobile, qui comporte au moins un volet de réglage de la quantité ou de la qualité (chaud/froid) de l'air pulsé, ce volet étant entraîné par un motoréducteur pas à pas mettant en oeuvre le dispositif de commande défini ci-dessus.

## Revendications

1. Dispositif pour la commande d'un moteur pas à pas unipolaire comportant un rotor magnétique (1) et un stator qui présente une pluralité de bobines (MM1-MM4) destinées à entraîner ledit rotor, et comprenant une source de tension continue (Vc) à laquelle sont reliées une première borne desdites bobines ainsi qu'une unité de contrôle (4) reliée aux secondes bornes desdites bobines pour commander la tension aux bornes des bobines selon une séquence répétitive qui correspond à plusieurs phases de commande successives, caractérisé en ce qu'il comporte de plus au moins une unité (65) de détection du blocage du rotor dont une entrée (E₂₁-figure 6 ; 61-figure 8) est reliée à la seconde borne d'une bobine (MM1) à surveiller du stator, et dont la sortie (S2) est connectée à une entrée (INT) de ladite unité de contrôle (4) pour transmettre un signal logique (V_{S2}) directement représentatif du blocage du rotor.

2. Dispositif selon la revendication 1 caractérisé en ce que l'unité (65) de détection du blocage du rotor comprend un comparateur dont une première entrée est connectée à l'entrée (E₂₁-figure 6) de l'unité de détection du blocage du rotor, dont une seconde entrée est connectée à la borne positive de la source d'alimentation continue (Vc), et dont la sortie est connectée à la sortie (S2) de l'unité (65) de détection du blocage du rotor.

3. Dispositif selon la revendication 1, caractérisé en ce que l'unité (65) de détection du blocage du rotor comprend au moins une deuxième entrée (E₂₂) reliée à la seconde borne d'une seconde bobine (MM3) du stator dont la tension de commande est complémentaire de la tension de commande de la première bobine (MM1) portée sur la première entrée (61).

4. Dispositif selon la revendication 3 caractérisé en ce que l'unité (65) de détection du blocage du rotor comprend :
- au moins un opérateur logique « OU » (64) dont les entrées (E11,E13) sont connectées aux entrées (61,63) de l'unité de détection du blocage du rotor ;
- au moins un comparateur (66) dont une première entrée (E22) est connectée à la sortie (S1) dudit opérateur logique « OU » (64), dont la seconde entrée (E22) est connectée à la borne positive de la source d'alimentation continue, et dont la sortie (S2) est connectée à la sortie (69) de l'unité (65) de détection du blocage du rotor.

5. Dispositif selon la revendication 4, caractérisé en ce l'opérateur logique « OU » (64) est un opérateur dit « en logique câblée », et comprend au moins deux diodes (D11,D13) dont les anodes sont connectées respectivement aux deux entrées (E11,E13) de l'opérateur et dont les cathodes sont reliées ensemble et connectée à la sortie (S1) de l'opérateur (64), ainsi qu'une résistance (R4) connectée entre les cathodes desdites diodes (D11,D13) et la masse.

6. Dispositif selon la revendication 2 ou selon la revendication 4, caractérisé en ce que le comparateur comprend un transistor PNP (T1) monté en comparateur inverseur, dont la base est connectée à l'entrée (E₂₁) dudit comparateur à travers une première résistance (R1), dont l'émetteur est connecté à la borne positive de la source d'alimentation continue (Vc), et dont le collecteur est relié à la masse à travers une seconde résistance (R2) et une troisième résistance (R3) montées en pont diviseur, la sortie de ce pont diviseur étant connectée à la sortie (S2).

7. Dispositif selon la revendication 6, caractérisé en ce que l'émetteur du transistor PNP (T1) est relié à la borne positive de la source d'alimentation continue (Vc) à travers au moins une diode (D1), dont l'anode est connectée à ladite borne positive de la source d'alimentation continue (Vc) et dont la cathode est connectée audit émetteur.

8. Dispositif selon l'une des revendications précédentes, caractérisé en ce que l'unité de contrôle (4) comprend un microcontrôleur (60) qui contient dans une première zone de mémoire un programme pour la mise en oeuvre de la séquence de commande de la tension aux bornes des bobines (MM1-MM4) du stator ; qui contient dans une seconde zone de mémoire la valeur d'un compteur/décompteur du nombre de pas commandés dans un sens de rotation ou dans l'autre ; qui comporte une horloge interne pour générer un signal d'horloge ; qui comporte des sorties (OUT1-OUT4) qui sont reliées à la seconde borne (M1-M4) des bobines (MM1-MM4) du stator et qui sont alternativement portées à la tension d'alimentation (Vc) ou à la masse selon la séquence de commande du moteur ; qui comporte au moins un port numérique d'entrée, constituant ladite entrée (INT) de l'unité de contrôle (4), qui est connecté à la sortie de l'unité (65) de détection du blocage du rotor pour recevoir le signal (V_{S2}) de détection du blocage du rotor .

9. Dispositif selon la revendication 8, limité en ce qu'il correspond à un dispositif selon la revendication 2, caractérisé en ce que ledit port d'entrée est une entrée d'interruption (INT), une interruption du programme pour la mise en oeuvre de la séquence de commande de la tension aux bornes des bobines du stator étant générée en cas de réception d'un front du signal de détection du blocage du rotor pendant les phases de commande (I-II) où le courant dans la bobine (MM1) à surveiller du stator est nul.

10. Dispositif selon la revendication 8, limité en ce qu'il correspond à un dispositif selon l'une des revendications 3 à 7, caractérisé en ce ledit port numérique d'entrée est une entrée d'interruption (INT) du microcontrôleur (60), et en ce qu'une interruption du programme pour la mise en oeuvre de la séquence de commande de la tension aux bornes des bobines du stator est générée en cas de réception d'un front du signal (V_{S2}) de détection du blocage du rotor.

11. Installation de chauffage ventilation et/ou climatisation caractérisée en ce qu'elle comporte au moins un volet de réglage de la quantité et/ou de la qualité de l'air qui est entraîné par un motoréducteur pas à pas mettant en oeuvre un dispositif de commande selon l'une des revendications précédentes.

## Patentansprüche

1. Regelvorrichtung für einen unipolaren Schrittmotor mit einem magnetischen Rotor (1) und einem Stator, der eine Mehrzahl von Spulen (MM1-MM4) aufweist, um den besagten Rotor anzutreiben, und mit einer Gleichspannungsquelle (Vc), mit der eine erste Klemme der besagten Spulen sowie eine mit den zweiten Klemmen der besagten Spulen verbundene Kontrolleinheit (4) verbunden sind, um die Klemmenspannung der Spulen nach einer Wiederholsequenz zu regeln, die mehreren aufeinanderfolgenden Regelungsphasen entspricht, **dadurch gekennzeichnet,** daß sie außerdem mindestens eine Erfassungseinheit (65) zur Erkennung der Rotorblockierung umfaßt, von der ein Eingang (E₂₁-Figur 6; 61-Figur 8) mit der zweiten Klemme einer zu überwachenden Spule (MM1) des Stators verbunden ist und deren Ausgang (S2) an einen Eingang (INT) der besagten Kontrolleinheit (4) angeschlossen ist, um ein für die Rotorblockierung direkt repräsentatives Signal (V_{S2}) zu übertragen.

2. Vorrichtung nach Anspruch 1, **dadurch gekennzeichnet,** daß die Erfassungseinheit (65) zur Erkennung der Rotorblockierung einen Vergleicher umfaßt, dessen erster Eingang an den Eingang (E₂₁-Figur 6) der Erfassungseinheit zur Erkennung der Rotorblockierung angeschlossen ist, dessen zweiter Eingang an die Plusklemme der Gleichspannungsquelle (Vc) angeschlossen ist und deren Ausgang an den Ausgang (S2) der Erfassungseinheit (65) zur Erkennung der Rotorblockierung angeschlossen ist.

3. Vorrichtung nach Anspruch 1, **dadurch gekennzeichnet,** daß die Erfassungseinheit (65) zur Erkennung der Rotorblockierung mindestens einen zweiten Eingang (E22) umfaßt, der mit der zweiten Klemme einer zweiten Spule (MM3) des Stators verbunden ist, deren Steuerspannung komplementär zu der an den ersten Eingang (61) angelegten Steuerspannung der ersten Spule (MM1) ist.

4. Vorrichtung nach Anspruch 3, **dadurch gekennzeichnet,** daß die Erfassungseinheit (65) zur Erkennung der Rotorblockierung folgendes umfaßt:
- mindestens eine logische "ODER"-Schaltung (64), deren Eingänge (E11, E13) an die Eingänge (61, 63) der Erfassungseinheit zur Erkennung der Rotorblockierung angeschlossen sind;
- mindestens einen Vergleicher (66), dessen erster Eingang (E22) an den Ausgang (S1) der besagten logischen "ODER"-Schaltung (64) angeschlossen ist, dessen zweiter Eingang (E22) an die Plusklemme der Gleichspannungsquelle angeschlossen ist und dessen Ausgang (S2) an den Ausgang (69) der Erfassungseinheit (65) zur Erkennung der Rotorblockierung angeschlossen ist.

5. Vorrichtung nach Anspruch 4, **dadurch gekennzeichnet,** daß die logische "ODER"-Schaltung (64) ein sogenanntes "fest verdrahtetes" Schaltungselement ist und mindestens zwei Dioden (D11, D13), deren Anoden jeweils an einen der beiden Eingänge (E11, E13) des Schaltungselements angeschlossen sind und deren Kathoden miteinander verbunden und an den Ausgang (S1) des Schaltungselements (64) angeschlossen sind, sowie einen zwischen den Kathoden der besagten Dioden (D11, D13) und der Masse geschalteten Widerstand (R4) umfaßt.

6. Vorrichtung nach Anspruch 2 oder nach Anspruch 4, **dadurch gekennzeichnet,** daß der Vergleicher einen als Inverter-Vergleicher geschalteten PNP-Transistor (T1) umfaßt, dessen Basis über einen ersten Widerstand (R1) an den Eingang (E₂₁) des besagten Vergleichers angeschlossen ist, dessen Emitter an die Plusklemme der Gleichspannungsguelle (Vc) angeschlossen ist und dessen Kollektor über einen zweiten Widerstand (R2) und einen dritten Widerstand (R3), die als Teilerbrücke geschaltet sind, mit der Masse verbunden ist, wobei der Ausgang dieser Teilerbrücke an den Ausgang (52) angeschlossen ist.

7. Vorrichtung nach Anspruch 6, **dadurch gekennzeichnet,** daß der Emitter des PNP-Transistors (T1) mit der Plusklemme der Gleichspannungsquelle (Vc) über mindestens eine Diode (D1) verbunden ist, deren Anode an die besagte Plusklemne der Gleichspannungsquelle (Vc) angeschlossen ist und deren Kathode an den besagten Emitter angeschlossen ist.

8. Vorrichtung nach einem der vorangehenden Ansprüche, **dadurch gekennzeichnet,** daß die Kontrolleinheit (4) einen Mikrosteuerbaustein (60) umfaßt, der in einem ersten Speicherbereich ein Programm zur Anwendung der Steuersequenz zur Regelung der Klemmenspannung der Spulen (MM1-MM4) des Stators enthält, der in einem zweiten Speicherbereich den Wert eines Auf-/Abwärtszählers für die Anzahl der in der einen oder anderen Drehrichtung geregelten Schritte enthält; der einen internen Taktgeber umfaßt, um ein Taktsignal zu erzeugen; der Ausgänge (OUT1-OUT4) umfaßt, die mit der zweiten Klemme (M1-M4) der Spulen (MM1-MM4) des Stators verbunden sind und die entsprechend der Steuersequenz wechselweise an die Speisespannung (Vc) oder an die Masse angelegt werden; der mindestens einen digitalen Eingangsport umfaßt, der den besagten Eingang (INT) der Kontrolleinheit (4) bildet und der an den Ausgang der Erfassungseinheit (65) zur Erkennung der Rotorblockierung angeschlossen ist, um das Erfassungssignal (V_{S2}) zur Erkennung der Rotorblockierung zu empfangen.

9. Vorrichtung nach Anspruch 8, dadurch beschränkt, daß sie einer Vorrichtung nach Anspruch 2 entspricht, **dadurch gekennzeichnet,** daß der besagte Eingangsport ein Unterbrechungseingang (INT) ist, wobei eine Unterbrechung des Programms zur Anwendung der Steuersequenz zur Regelung der Klemmenspannung der Spulen des Stators im Falle des Empfangs einer Signalflanke des Erfassungssignals zur Erkennung der Rotorblockierung während der Regelungsphasen (I-II) erzeugt wird, in denen der Strom in der zu überwachenden Spule (MM1) des Stators gleich null ist.

10. Vorrichtung nach Anspruch 8, dadurch beschränkt, daß sie einer Vorrichtung nach einem der Ansprüche 3 bis 7 entspricht , **dadurch gekennzeichnet,** daß es sich bei dem besagten digitalen Eingangsport um einen Unterbrechungseingang (INT) des Mikrosteuerbausteins (60) handelt und daß eine Unterbrechung des Programms zur Anwendung der Steuersequenz zur Regelung der Klemmenspannung der Spulen des Stators im Falle des Empfangs einer Signalflanke des Erfassungssignals (V_{S2}) zur Erkennung der Rotorblockierung erzeugt wird.

11. Heizungs-, Belüftungs- und/oder Klimaanlage, **dadurch gekennzeichnet,** daß sie mindestens eine Regelklappe zur Regelung der Menge oder der Beschaffenheit der Luft umfaßt, die durch einen Schrittgetriebemotor angetrieben wird, bei dem eine Regelvorrichtung nach einem der vorangehenden Ansprüche zur Anwendung kommt.

## Claims

1. Device for controlling a single-pole stepping motor having a magnetic rotor (1) and a stator which has a plurality of windings (MM1-MM4) intended to drive the said rotor, and comprising a DC voltage source (Vc) to which there are connected a first terminal of said windings and a control unit (4) connected to the second terminals of said windings in order to control the voltage at the terminal of the windings in accordance with a repetitive sequence which corresponds to several successive control phases, characterised in that it also has at least one unit (65) for detecting the locking of the rotor, an input (E₂₁ - Figure 6; 61 - Figure 8) of which is connected to the second terminal of a stator winding (MM1) to be monitored, and the output (S2) of which is connected to an input (INT) of the said control unit (4) for transmitting a logic signal (V_{S2}) directly representing the locking of the rotor.

2. Device according to Claim 1, characterised in that the rotor locking detection unit (65) comprises a comparator, a first input of which is connected to the input (E₂₁ - Figure 6) of the rotor locking detection unit, a second input of which is connected to the positive terminal of the DC supply source (Vc), and the output of which is connected to the output (S2) of the rotor locking detection unit (65).

3. Device according to Claim 1, characterised in that the rotor locking detection unit (65) comprises at least one second input (E₂₂) connected to the second terminal of a second winding (MM3) of the stator, whose control voltage is complementary to the control voltage of the first winding (MM1) carried at the first input (61).

4. Device according to Claim 3, characterised in that the rotor locking detection unit (65) comprises:
- at least one logic "OR" operator (64) whose inputs (E11, E13) are connected to the inputs (61, 63) of the rotor locking detection unit;
- at least one comparator (66), a first input (E22) of whicb is connected to the output (S1) of said logic "OR" operator (64), the second input (E22) of which is connected to the positive terminal of the DC supply source, and the output (S2) of which is connected to the output (69) of the rotor locking detection unit (65).

5. Device according to Claim 4, characterised in that the logic "OR" operator (64) is a so-called "hard-wired logic" operator and comprises at least two diodes (D11, D13) whose anodes are connected respectively to the two inputs (E11, E13) of the operator and whose cathodes are connected together and are connected to the output (S1) of the operator (64), as well as a resistor (R4) connected between the cathodes of the said diodes (D11, D13) and earth.

6. Device according to Claim 2 or according to Claim 4, characterised in that the comparator comprises a pnp transistor (T1) connected as an inverting comparator, whose base is connected to the input (E₂₁) of the said comparator through a first resistor (R1), whose emitter is connected to the positive terminal of the DC supply source (Vc), and whose collector is connected to earth through a second resistor (R2) and a third resistor (R3), both connected as a divider bridge, the output of this divider bridge being connected to the output (S2).

7. Device according to Claim 6, characterised in that the emitter of the pnp transistor (T1) is connected to the positive terminal of the DC supply source (Vc) through at least one diode (D1), whose anode is connected to the said positive terminal of the DC supply source (Vc) and whose cathode is connected to the said emitter.

8. Device according to one of the preceding claims, characterised in that the control unit (4) comprises a microcontroller (60) which contains, in a first memory area, a program for implementing the sequence of controlling the voltage at the terminals of the stator windings (MM1-MM4); which contains in a second memory area the value of a counter/downcounter for the number of steps demanded in one direction of rotation or the other; which has an internal clock for generating a clock signal; which has outputs (OUT1-OUT4) whicb are connected to the second terminal (M1-M4) of the stator windings (MM1-MM4) and which are alternately taken to the supply voltage (Vc) or to earth depending on the motor control sequence; which has at least one digital input port, constituting the said input (INT) of the control unit (4), which is connected -to the output of the rotor locking detection unit (65) in order to receive the rotor locking detection signal (V_{S2}).

9. Device according to Claim 8, limited in that it corresponds to a device according to Claim 2, characterised in that the said input port is an interrupt input (INT), an interruption of the program for implementing the sequence controlling the voltage at the terminals of the stator windings being generated in the event of reception of an edge of the rotor locking detection signal during the control phases (I-II) where the current in the stator winding (mm1) to be monitored is nil.

10. Device according to Claim 8, limited in that it corresponds to a device according to one of Claims 3 to 7, characterised in that the said digital input port is an interrupt input (INT) of the microcontroller (60), and in that an interruption of the program for implementing the sequence controlling the voltage at the terminals of the stator windings is generated in the event of reception of an edge of the rotor locking detection signal (V_{S2}).

11. Heating, ventilation and/or air conditioning installation, characterised in that it has at least one shutter for regulating the quantity and/or quality of the air which is driven by a geared stepping motor using a control device according to one of the preceding claims.
